# EUROPÄISCHE PATENTSCHRIFT

(11) **EP 2 296 803 B1**
(45) Veröffentlichungstag und Bekanntmachung des Hinweises auf die Patenterteilung: **10.07.2013**
(21) Anmeldenummer: 09753539.7
(22) Anmeldetag: 27.05.2009
(51) Int. Cl.: B01J 12/00, C01B 33/107, H05H 1/24

(54) **HALOGENIERTES POLYSILAN UND PLASMACHEMISCHES VERFAHREN ZU DESSEN HERSTELLUNG**
HALOGENATED POLYSILANE AND PLASMA-CHEMICAL PROCESS FOR PRODUCING THE SAME
POLYSILANE HALOGÉNÉ ET SON PROCÉDÉ CHIMIQUE DE PRODUCTION ASSISTÉ PAR PLASMA

(30) Priorität: 27.05.2008 DE 102008025261
(43) Veröffentlichungstag der Anmeldung: 23.03.2011
(73) Patentinhaber: Spawnt Private S.à.r.l., 1148 Luxembourg (LU)
(72) Erfinder: BAUCH, Christian, 06766 Bitterfeld-Wolfen (DE); DELTSCHEW, Rumen, 04319 Leipzig (DE); LIPPOLD, Gerd, 04179 Leipzig (DE); MOHSSENI-ALA, Seyed-Javad, 06766 Bitterfeld-Wolfen (DE); AUNER, Norbert, 61479 Glashütten (DE)
(74) Vertreter: Epping - Hermann - Fischer
(86) Internationale Anmeldenummer: PCT/DE2009/000726
(87) Internationale Veröffentlichungsnummer: WO 2009/143823

(56) Entgegenhaltungen:
- WO-A-2008/009473
- DE-A1-102005 024 041
- HERZOG & R WEST U: "Heterosubstituted Polysilanes" MACROMOLECULES,, Bd. 32, 1. Januar 1999 (1999-01-01), Seiten 2210-2214, XP002549486
- P.L. TIMMS ET.AL.: "Silicon-Fluorine Chemistry. I. Silicon Difluoride and Polyfluorosilanes" JOURNAL OF THE AMERICAN CHEMICAL SOCIETY, Bd. 87, 1965, Seiten 2824-2828, XP002549640 in der Anmeldung erwähnt
- M. SCHMEISSER & K. FRIEDERICH: "Siliciumdijodid [SiJ2]x" ANGEW. CHEM., Bd. 76, 1964, Seite 782, XP002549641 in der Anmeldung erwähnt

## Beschreibung

Die vorliegende Erfindung betrifft ein halogeniertes Polysilan als reine Verbindung oder Gemisch von Verbindungen mit jeweils mindestens einer direkten Bindung Si-Si, deren Substituenten ausschließlich aus Halogen oder aus Halogen und Wasserstoff bestehen und in deren Zusammensetzung das Atomverhältnis Substituent:Silicium mindestens 1:1 beträgt.

Derartige chlorierte Polysilane sind im Stand der Technik bekannt [Lit.: DE 10 2005 024 041 A1; DE 10 2006 034 061 A1; WO 2008/031427 A2; WO 81/03168; US 2005/0142046 A1; M. Schmeisser, P. Voss "Über das Siliciumchlorid [SiCl2]x", Z. anorg. allg. Chem. (1964) 334, 50-56 (Schmeisser, 1964); US 2007/0078252 A1; DE 31 26 240 C2; UK 703,349]. Sie lassen sich einerseits über eine rein thermische Reaktion (Schmeisser, 1964) durch Erhitzen von dampfförmigen Chlorsilanen mit oder ohne Reduktionsmittel auf relativ hohe Temperaturen (über 700°C) herstellen. Die erhaltenen chlorierten Polysilane weisen eine schwache Färbung von schmutziggelb bis gelblich-hell-braun (Schmeisser, 1964; "schwach grüngelb, glasartig, hochpolymer") auf. Spektroskopische Untersuchungen haben ergeben, dass derartige rein thermisch hergestellte Polysilane einen hohen Anteil an kurzkettigen, verzweigten und zyklischen Molekülen besitzen. Weiterhin ist das erhaltene Gemisch herstellungsbedingt (sehr hohe Temperaturen) stark mit AlCl₃ verunreinigt.

In GB 702,349 wird offenbart, dass bei der Umsetzung von Siliciumlegierungen mit Chlorgas bei 190-250 °C ein Gemisch von chlorierten Polysilanen aus dem Gasstrom kondensiert wird. Die mittlere Molmasse dieser Gemische ist relativ gering, da bei einer Destillation nur 2% der Silane mit n *größer als* 6 anfallen.

DE 31 26 240 C2 beschreibt die nasschemische Herstellung von chlorierten Polysilanen aus Si₂Cl₆ durch Reaktion mit einem Katalysator. Die erhaltenen Mischungen enthalten noch den Katalysator und werden deshalb mit organischen Lösungsmitteln gewaschen, wodurch Spuren dieser Lösemittel und des Katalysators zurückbleiben. Außerdem sind so erhaltene PCS stark verzweigt. Weitere nasschemische Verfahren werden in US 2007/0078252 A1 vorgestellt:
1. Halogenierte Aryloligosilane mit Natrium zu reduzieren und nachfolgend mit HCl/AlCl₃ Aromaten abzuspalten.
2. Übergangsmetallkatalysierte dehydrierende Polymerisation von arylierten H-Silanen und nachfolgende Entarylierung mit HCl/AlCl₃.
3. Anionisch katalysierte Ringöffnungspolymerisation (ROP) von (SiCl₂)₅ mit TBAF (Bu₄NF).
4. ROP von (SiAr₂)₅ mit TBAF oder Ph₃SiK und nachfolgende Entarylierung mit HCl/AlCl₃.

Bei all diesen Methoden werden wiederum mit Lösungsmittel/Katalysator verunreinigte PCS erhalten.

In H. Stüger, P. Lassacher, E. Hengge, Zeitschrift für allgemeine und anorganische Chemie 621 (1995) 1517-1522 wird Si₅Cl₉H durch Kochen mit Hg(tBu₂) in Heptan zum entsprechenden Bis-cyclopentasilan Si₁₀Cl₁₈ umgesetzt. Alternativ kann eine Ringverknüpfung von Si₅Ph₉Br mit Naphtyllithium oder K bzw. Na/K in verschiedenen Lösungsmitteln mit anschließender Halogenierung mit HCl/AlCl₃ erfolgen.

Ferner ist bekannt, derartige halogenierte Polysilane über ein plasmachemisches Verfahren herzustellen. Beispielsweise betrifft die DE 10 2005 024 041 A1 ein Verfahren zur Herstellung von Silicium aus Halogensilanen, bei dem in einem ersten Schritt das Halogensilan unter Erzeugung einer Plasmaentladung zu einem halogenierten Polysilan umgesetzt wird, das nachfolgend in einem zweiten Schritt unter Erhitzen zu Silicium zersetzt wird. Bei diesem bekannten Verfahren wird in Bezug auf die Plasmaerzeugung mit hohen Energiedichten gearbeitet (größer 10 Wcm⁻³), wobei das Endprodukt ein wenig kompakter wachsartig-weißer bis gelbbrauner oder brauner Feststoff ist. Spektroskopische Untersuchungen haben gezeigt, dass das erhaltene Endprodukt einen relativ großen Vernetzungsgrad aufweist. Die hohen verwendeten Energiedichten führen zu Produkten hoher Molmassen, woraus Unlöslichkeit und geringe Schmelzbarkeit resultieren.

Weiterhin wird in WO 81/03168 ein Hochdruckplasmaverfahren zur Synthese von HSiCl₃ beschrieben, bei welchem PCS als geringfügige Nebenprodukte anfallen. Da diese PCS bei extrem hohen Gastemperaturen erzeugt werden, sind sie relativ kurzkettig und stark verzweigt. Außerdem besitzt dieses PCS durch die hydrierenden Bedingungen (HSiCl₃-Synthese!) einen hohen H-Gehalt. In US 2005/0142046 A1 wird eine PCS-Herstellung durch stille elektrische Entladung in SiCl₄ bei Normaldruck beschrieben. Hierbei entstehen nur kurzkettige Polysilane, wie der Autor anhand der selektiven Umsetzung von SiH₄ zu Si₂H₆ und Si₃H₈ durch Hintereinanderschaltung mehrerer Reaktoren zeigt. Analog verhält es sich gemäß DE 10 2006 034 061 A1, wo eine ähnliche Reaktion beschrieben wird, bei der gasförmige und flüssige PCS mit Si₂Cl₆ als Hauptbestandteil (S. 3, [00161]) erhalten werden. Zwar beschreiben die Autoren, dass die Molmassen der PCS durch Verwendung mehrerer hintereinandergeschalteter Reaktoren erhöht werden können, jedoch kann hierbei nur Material erhalten werden, das sich unzersetzt in die Gasphase bringen lässt. Diesen Sachverhalt bringen die Autoren auch in den Ansprüchen zum Ausdruck, in denen sie Destillationen für alle erhaltenen PCS-Gemische vorsehen.

Neben chlorierten Polysilanen sind auch weitere halogenierte Polysilane SiₓX_{y} (X = F, Br, I) im Stand der Technik bekannt.

E. Hengge, G. Olbrich, Monatshefte für Chemie 101 (1970) 1068-1073 beschreibt die Herstellung eines flächig aufgebauten Polymers (SiF)ₓ. Aus CaSi₂ werden durch Reaktion mit ICl bzw. IBr die flächig aufgebauten Polymere (SiCl)ₓ bzw. (SiBr)ₓ erhalten. Mit SbF₃ wird dann ein Halogenaustausch vollzogen. Dabei tritt jedoch teilweiser Abbau der Si-Schichtstruktur ein. Das entstehende Produkt enthält die stöchiometrisch aus CaSi₂ vorgegebene Menge CaCl₂, die nicht ausgewaschen werden kann.

Die Herstellung von Polyfluorsilan (SiF₂)ₓ wird beispielsweise in M. Schmeisser, Angewandte Chemie 66 (1954) 713-714 beschrieben. SiBr₂F₂ reagiert bei Raumtemperatur in Ether mit Magnesium zu einem gelben, hochpolymeren (SiF₂)ₓ. Verbindungen wie Si₁₀Cl₂₂, (SiBr)ₓ und Si₁₀Br₁₆ lassen sich mit ZnF₂ zu den entsprechenden Fluoriden umhalogenieren. Die Standardmethode zur Erzeugung von (SiF₂)ₓ wird beispielsweise in P.L. Timms, R.A. Kent, T.C. Ehlert, J.L. Margrave, Journal of the american chemical society 87 (1965) 2824-2828 erläutert. Dabei wird (SiF₂)ₓ durch Überleiten von SiF₄ über Silicium bei 1150°C und 0,1-0,2 Torr und Ausfrieren des entstehenden SiF₂ bei -196°C mit Polymerisation beim anschließenden Auftauen erzeugt. Das farblose bis leicht gelbe plastische Polymer schmilzt beim Erwärmen auf 200 - 350°C im Vakuum und setzt perfluorierte Silane von SiF₄ bis mindestens Si₁₄F₃₀ frei. Es verbleibt ein siliciumreiches Polymer (SiF)ₓ, das sich bei 400 ± 10°C heftig zu SiF₄ und Si zersetzt. Die niederen Perfluorpolysilane sind farblose Flüssigkeiten oder kristalline Feststoffe, die durch fraktionierte Kondensation in Reinheiten > 95% isolierbar sind.

Spuren sekundärer oder tertiärer Amine katalysieren die Polymerisation der Perfluoroligosilane.
FI 82232 B offenbart eine Reaktion bei noch höherer Temperatur. SiF₄ reagiert mit Si in einer Ar-Plasmaflamme zu SiF₂ (0,8 : 1 mol, 70% SiF₂-Gehalt)

Kurzkettige perbromierte Polysilane entstehen nach A. Besson, L. Fournier, Comptes rendus 151 (1911) 1055-1057. Eine elektrische Entladung in gasförmigem HSiBr₃ erzeugt SiBr₄, Si₂Br₆, Si₃Br₈ und Si₄Br₁₀.

K. Hassler, E. Hengge, D. Kovar, Journal of molecular structure 66 (1980) 25-30 stellen cyclo-Si₄Br₈ durch Reaktion von (SiPh₂)₄ mit HBr unter AlBr₃-Katalyse her.
In H. Stüger, P. Lassacher, E. Hengge, Zeitschrift für allgemeine und anorganische Chemie 621 (1995) 1517-1522 wird Si₅Br₉H durch Kochen mit Hg(tBu₂) in Heptan zum entsprechenden Bis-cyclopentasilan Si₁₀Br₁₈ umgesetzt. Alternativ kann eine Ringverknüpfung von Si₅Ph₉Br mit Naphtyllithium oder K bzw. Na/K in verschiedenen Lösungsmitteln mit anschließender Halogenierung mit HBr/AlBr₃ erfolgen.

Hochmolekulare Siliciumsubbromide lassen sich nach M. Schmeisser, Angewandte Chemie 66 (1954) 713-714 einerseits durch Umsetzung von SiBr₄ mit Magnesium in Ether in Form des gelben, festen (SiBr)ₓ darstellen, andererseits durch Einwirken von SiBr₄ auf elementares Si bei 1150°C, was neben (SiBr)ₓ auch Si₂Br₆ und weitere Oligosilane wie Si₁₀Br₁₆ erzeugt.

DE 955414 B offenbart ebenfalls eine Reaktion bei hoher Temperatur. Wird SiBr₄- oder Br₂-Dampf im Vakuum bei 1000-1200°C durch Siliciumgrieß geleitet, so entsteht neben etwas Si₂Br₆ hauptsächlich (SiBr₂)ₓ.

In US 2007/0078252 A1 wird die Ringöffnungspolymerisation von cyclo-Si₅Br₁₀ und cyclo-Si₅I₁₀ durch Einwirkung von Bu₄NF in THF oder DME beansprucht.

Beispielsweise E. Hengge, D. Kovar, Angewandte Chemie 93 (1981) 698-701 oder K. Hassler, U. Katzenbeisser, Journal of organometallic chemistry 480 (1994) 173-175 berichten über die Erzeugung kurzkettiger periodierter Polysilane. Durch Umsetzung der Phenylcyclosilane (SiPh₂)ₙ (n = 4 - 6) oder von Si₃Ph₈ mit HI unter AlI₃-Katalyse entstehen die periodierten Cyclosilane (SiI₂)ₙ (n = 4 - 6) oder Si₃I₈. M. Schmeißer, K. Friederich, Angewandte Chemie 76 (1964) 782 beschreiben verschiedene Wege zur Herstellung von periodierten Polysilanen. (SiI₂)ₓ entsteht in ca. 1% Ausbeute beim Überleiten von SiI₄-Dampf über elementares Silicium bei 800-900°C im Hochvakuum. Die Pyrolyse von SiI₄ unter den gleichen Bedingungen liefert das gleiche sehr hydrolyseempfindliche und in Benzol lösliche Produkt. Bei der Einwirkung einer Glimmentladung auf SiI₄-Dämpfe im Hochvakuum wird mit einer Ausbeute von 60 bis 70 % (bezogen auf SiI₄) ein festes, amorphes, gelbrötliches, in allen üblichen Lösungsmitteln unlösliches Siliciumsubiodid der Zusammensetzung (SiI_{2,2})ₓ erhalten. Die Pyrolyse dieser Substanz bei 220 bis 230°C im Hochvakuum führt zu einem dunkelroten (SiI₂)ₓ, wobei gleichzeitig SiI₄ und Si₂I₆ entstehen. Die chemischen Eigenschaften der so gewonnenen Verbindungen (SiI₂)ₓ stimmen - bis auf die Löslichkeit in Benzol - überein. Die Pyrolyse von (SiI₂)ₓ bei 350 °C im Hochvakuum ergibt SiI₄ , Si₂I₆ und einen orangeroten, spröden Festkörper der Zusammensetzung (SiI)ₓ. (SiI₂)ₓ reagiert mit Chlor oder Brom zwischen -30 °C und +25 °C zu benzol-löslichen, gemischten Siliciumsubhalogeniden wie (SiClI)ₓ und (SiBrI)ₓ. Bei höheren Temperaturen werden die Si-Si-Ketten durch Chlor oder Brom bei gleichzeitiger völliger Substitution des Iods gespalten. Man erhält Verbindungen vom Typ SiₙX₂ₙ₊₂ (n = 2-6 für X = Cl, n = 2-5 für X = Br). (SiI₂)ₓ reagiert mit Iod bei 90 bis 120°C im Bombenrohr vollständig zu SiI₄ und Si₂I₆.

Der vorliegenden Erfindung liegt die Aufgabe zugrunde, ein halogeniertes Polysilan der angegebenen Art zu schaffen, das besonders gut löslich und schmelzbar ist. Weiterhin soll ein Verfahren zur Herstellung eines derartigen halogenierten Polysilans zur Verfügung gestellt werden.

Diese Aufgabe wird gemäß einer ersten Ausführungsform bei einem halogenierten Polysilan der angegebenen Art dadurch gelöst, dass das halogenierte Polysilan als reine Verbindung oder Gemisch von Verbindungen mit jeweils mindestens einer direkten Bindung Si-Si, deren Substituenten aus Halogen oder aus Halogen und Wasserstoff bestehen und in deren Zusammensetzung das Atomverhältnis Substituent:Silicium mindestens 1:1 beträgt, vorliegt, wobei
a) das Halogen Chlor ist,
b) der Wasserstoff-Gehalt des Polysilans kleiner als 2 Atom-% ist,
c) das Polysilan nahezu keine kurzkettigen verzweigten Ketten und Ringe enthält, wobei der Gehalt an Verzweigungsstellen des kurzkettigen Anteiles bezogen auf das gesamte Produktgemisch kleiner als 1 % beträgt,
d) es ein RAMAN-Molekülschwingungsspektrum von I₁₀₀ /I₁₃₂ > 1 aufweist, wobei I₁₀₀ die Raman-Intensität bei 100 cm⁻¹ und I₁₃₂ die Raman-Intensität bei 132 cm⁻¹ bedeuten, und
e) es in ²⁹Si-NMR-Spektren seine signifikanten Produktsignale im chemischen Verschiebungsbereich von +15 ppm bis -7 ppm besitzt.

Bei einer zweiten Ausführungsform der Erfindung wird die genannte Aufgabe bei einem halogenierten Polysilan der angegebenen Art dadurch gelöst, dass das halogenierte Polysilan als reine Verbindung oder Gemisch von Verbindungen mit jeweils mindestens einer direkten Bindung Si-Si, deren Substituenten aus Halogen oder aus Halogen und Wasserstoff bestehen und in deren Zusammensetzung das Atomverhältnis Substituent:Silicium mindestens 1:1 beträgt, vorliegt, wobei
a) das Halogen Brom ist, und
b) es in ²⁹Si-NMR-Spektren seine signifikanten Produktsignale im chemischen Verschiebungsbereich von -10 ppm bis -42 ppm, von -48 ppm bis -52 ppm und/oder von -65 ppm bis -96 ppm aufweist.

Das vorstehend beschriebene halogenierte Polysilan weist vorzugsweise typische RAMAN-Intensitäten bei 110 cm⁻¹ bis 130 cm⁻¹, bei 170 cm⁻¹ bis 230 cm⁻¹, bei 450 cm⁻¹ bis 550 cm⁻¹ und bei 940 cm⁻¹ bis 1.000 cm⁻¹ auf.

Der Wasserstoff-Gehalt dieses Polysilans ist vorzugsweise kleiner als 4 Atom-%.

Bei einer dritten Ausführungsform der Erfindung wird die vorstehend genannte Aufgabe erfindungsgemäß dadurch gelöst, dass das halogenierte Polysilan als reine Verbindung oder Gemisch von Verbindungen mit jeweils mindestens einer direkten Bindung Si-Si, deren Substituenten aus Halogen oder aus Halogen und Wasserstoff bestehen und in deren Zusammensetzung das Atomverhältnis Substituent:Silicium mindestens 1:1 beträgt, vorliegt, wobei
a) das Halogen Fluor ist , und
b) es in seinem ²⁹Si-NMR-Spektrum signifikante Produktsignale im chemischen Verschiebungsbereich von 8 ppm bis -30 ppm und/oder von -45 ppm bis -115 ppm aufweist,
und wobei das halogenierte Polysilan überwiegend lange Ketten mit n > 6 enthält.

Dieses fluorierte Polysilan besitzt vorzugsweise typische Raman-Intensitäten bei ca. 180 cm⁻¹ bis 225 cm⁻¹, bei ca. 490 cm⁻¹ bis 550 cm⁻¹ und bei ca. 900 cm⁻¹ bis 980 cm⁻¹.

Der Wasserstoff-Gehalt dieses Polysilans ist vorzugsweise kleiner als 4 Atom-%.

Bei einer vierten Ausführungsform der Erfindung wird die vorstehend genannte Aufgabe erfindungsgemäß dadurch gelöst, dass das halogenierte Polysilan als reine Verbindung oder Gemisch von Verbindungen mit jeweils mindestens einer direkten Bindung Si-Si, deren Substituenten aus Halogen oder aus Halogen und Wasserstoff bestehen und in deren Zusammensetzung das Atomverhältnis Substituent:Silicium mindestens 1:1 beträgt, vorliegt, wobei
a) das Halogen Iod ist, und
b) es in seinem ²⁹Si-NMR-Spektrum signifikante Produktsignale im chemischen Verschiebungsbereich von -20 ppm bis -55 ppm, von -65 ppm bis -105 ppm und/oder von -135 ppm bis -181 ppm aufweist.

Dieses iodierte Polysilan besitzt vorzugsweise typische Raman-Intensitäten bei ca: 95 cm⁻¹ bis 120 cm⁻¹, bei 130 cm⁻¹ bis 140 cm⁻¹, bei 320 cm⁻¹ bis 390 cm⁻¹ und bei 480 cm⁻¹ bis 520 cm⁻¹.

Der Wasserstoff-Gehalt dieses Polysilans ist vorzugsweise kleiner als 4 Atom-%.

Die Erfindung betrifft ferner eines der oben beschriebenen halogenierten Polysilane, die Halogensubstituenten mehrerer verschiedener Halogene enthalten.

Die ²⁹Si-NMR-Spektren wurden an einem 250 MHz-Gerät vom Typ Bruker DPX 250 mit der Pulssequenz zg30 aufgenommen und gegen Tetramethylsilan (TMS) als externen Standard [δ(²⁹Si)=0,0] referenziert. Die Aquisitionsparameter sind hierbei: TD=32k, AQ=1,652 s, D1=10 s, NS=2400, O1P=-40, SW=400.

Die Raman-Molekülschwingungsspektren wurden mit einem Spektrometer XY 800 der Firma Dilor mit abstimmbarer Laseranregung (T-Saphirlaser, durch Ar-Ionen-Laser gepumpt) sowie konfokalem Raman- und Lumineszenzmikroskop, mit flüssigem Stickstoff gekühltem CCD-Detektor, Messtemperatur gleich Raumtemperatur, Anregungswellenlängen im sichtbaren Spektralbereich, u.a. 514,53 nm und 750 nm, ermittelt.

Der hier verwendete Begriff kurzkettig betrifft diejenigen Verbindungen, bei denen n = 2-6 beträgt. Dabei ist n die Anzahl der direkt aneinander gebundenen Si-Atome. Als langkettig werden daher diejenigen Polymere angesehen, bei denen n größer als 6 ist.

"Nahezu keine" soll bedeuten, dass weniger als 2% im Gemisch enthalten sind. Unter "überwiegend" wird verstanden, dass der betreffende Bestandteil zu mehr als 50% im Gemisch enthalten ist.

"Grundgerüst" soll alle durch Si-Si-Bindung miteinander verbundenen Silicium-Atome einer Verbindung umfassen.

Das erfindungsgemäß ausgebildete halogenierte Polysilan wird mit deutlich "weicheren" (Energiedichte) Plasmabedingungen hergestellt. Hierdurch wird erreicht, dass das erzeugte Polysilan bei relativ hohen mittleren Kettenlängen (n= 9-25) leicht löslich und gut schmelzbar ist.

Der Verzweigungsgrad des chlorierten Polysilans wurde per ²⁹Si-NMR-Spektroskopie ermittelt. Dabei wurde festgestellt, dass die mit dem erfindungsgemäßen Verfahren hergestellten chlorierten Polysilane einen geringen Gehalt an verzweigten kurzkettigen Verbindungen aufweisen, wobei deren Verzweigungsstellen einen Anteil am Gesamtgemisch von weniger als 1 % besitzen. Die Verzweigungen im ²⁹Si-NMR-Spektrum zeigten sich dabei in einem Bereich von δ = -20 bis -40 ppm und δ = -65 bis -90 ppm. In Standard-²⁹Si-NMR-Spektren der erfindungsgemäßen chlorierten Polysilane zeigen sich in diesen Bereichen nur sehr kleine oder gar keine Resonanzen, was ein deutliches Unterscheidungsmerkmal gegenüber z.B. thermisch hergestellten chlorierten Polysilanen ist, die einen hohen Anteil Verzweigungsstellen besitzen. Dies hängt damit zusammen, dass letztere chlorierten Polysilane thermodynamisch günstiger als chlorierte Polysilane mit unverzweigten Ketten sind und daher bei der thermischen Reaktion bevorzugt entstehen, während im Plasmaprozess, der weit entfernt vom thermodynamischen Gleichgewicht abläuft, die thermodynamisch günstigeren Verzweigungen weniger bevorzugt werden.

Auch der Gehalt an Cyclosilanen wurde per ²⁹Si-NMR- und RAMAN-Spektroskopie ermittelt, wobei sich zeigte, dass der Gehalt an kleinen Ringen (Si₄, Si₅, Si₆) sehr gering ist.

Ferner weisen die erfindungsgemäß ausgebildeten chlorierten Polysilane ein Raman-Molekülschwingungsspektrum von I₁₀₀/I₁₃₂ > 1 auf. Insbesondere treten im niederfrequenten Bereich starke Raman-Signale im Bereich von 95-110 cm⁻¹ auf, während im Bereich 120-135 cm⁻¹ wesentlich schwächere Raman-Intentsitäten gemessen wurden.

Rein thermisch hergestellte chlorierte Polysilane besitzen ein Verhältnis I₁₀₀/I₁₃₂ von < 1.

Zur Erklärung hierfür sei auf folgendes hingewiesen. Theoretische, quantenmechanische Berechnungen zeigen für zyklische chlorierte Polysilane u. a. intensive charakteristische Schwingungsmoden zwischen 120 cm⁻¹ und 135 cm⁻¹. Derartige Berechnungen für lineare halogenierte Polysilane dagegen zeigen in diesem Bereich keine ausgeprägten Moden. Die niederfrequentesten, intensiven Moden der linearen Verbindungen dagegen verschieben sich mit zunehmender Kettenlänge nach kleineren Wellenzahlen. Beim Gemisch aus halogenierten Polysilanen treten sie als Raman-Bande zwischen 95 und 110 cm⁻¹ in Erscheinung. Insofern lässt sich aus dem I₁₀₀/I₁₃₂-Kriterium eine Aussage über den Gehalt an zyklischen bzw. linearen Molekülen treffen.

Das erfindungsgemäß hergestellte halogenierte Polysilan zeichnet sich ferner dadurch aus, dass es in vielen Lösungsmitteln löslich ist, so dass es leicht aus einem für die Herstellung verwendeten Reaktor entfernt werden kann.

Das erfindungsgemäß ausgebildete halogenierte Polysilan lässt sich insbesondere in inerten Lösungsmitteln , wie SiCl₄, Benzol, Toluol , Paraffin etc., gut lösen, und zwar sowohl bei Raumtemperatur als auch in kalten und warmen oder siedenden Lösungsmitteln. Dies steht im Gegensatz zu dem gemäß der vorstehend genannten Veröffentlichung DE 10 2005 024 041 A1 hergestellten halogenierten Polysilan, das in derartigen Lösungsmitteln überhaupt nicht löslich ist bzw. nur zu einem kleinen Teil gelöst werden kann.

Das erfindungsgemäße halogenierte Polysilan zeichnet sich vorzugsweise dadurch aus, dass dessen Substituenten ausschließlich aus Halogen oder aus Halogen und Wasserstoff bestehen.

Das erfindungsgemäß ausgebildete halogenierte Polysilan weist vorzugsweise überwiegend lange Ketten auf (im Mittel: n=8 bis 20). Das halogenierte Polysilan weist überwiegend lange Ketten mit n > 6 auf, wenn das Halogen Fluor ist.

Das erfindungsgemäß ausgebildete halogenierte Polysilan unterscheidet sich gegenüber dem plasmachemisch hergestellten Polysilan des genannten Standes der Technik ferner dadurch, dass das hergestellte Polysilanrohgemisch eine geringere mittlere Kettenlänge aufweist. So beträgt die mittlere Kettenlänge des hergestellten Rohgemisches aus halogeniertem Polysilan (mittlere Größe des Grundgerüstes) vorzugsweise n = 8-20. Nach dem Abdestillieren der kurzkettigen Polysilane beträgt n vorzugsweise 15-25.

Ein weiteres Unterscheidungskriterium gegenüber dem Stand der Technik besteht darin, dass das erfindungsgemäße halogenierte Polysilan einen geringen Wasserstoffgehalt besitzt (kleiner als 2 Atom-% bzw. kleiner als 4 Atom-%) und insbesondere weniger als 1 Atom-% Wasserstoff enthält.

Ferner ist das erfindungsgemäße Polysilan aufgrund seiner Herstellung in einem Plasmaprozess hochrein in Bezug auf Dotierstoff/Metall- und Lösungsmittelkontaminationen, was ein weiteres Unterscheidungsmerkmal zu den nasschemischen Verfahren zur Herstellung von Polysilanen ist, da bei letzteren Verfahren immer Spuren von Lösungsmitteln und metallsalzartigen Reagenzien im Produkt verbleiben. Insbesondere erfüllt das in einem Plasmaprozess erhaltene erfindungsgemäße, hochreine Polysilan die Anforderungen für Anwendungen in der Photovoltaik, weist also Photovoltaik-Grade auf.

Das halogenierte Polysilan ist zähviskos bis fest. Als chloriertes Polysilan besitzt es eine grünlichgelbe bis intensiv orange oder rotbraune Farbe und als bromiertes Polysilan ist es farblos bis gelb.

Die vorstehend genannte Aufgabe wird ferner durch ein Verfahren zum Herstellen von halogeniertem Polysilan der vorstehend beschriebenen Art durch Umsetzen von Halogensilan mit Wasserstoff unter Erzeugung einer Plasmaentladung gelöst, das dadurch gekennzeichnet ist, dass mit einem Mischungsverhältnis Halogensilan:Wasserstoff von 1:0-1:2 und in Bezug auf die Plasmaentladung mit einer Energiedichte von kleiner als 10 Wcm⁻³ gearbeitet wird.

Das erfindungsgemäße Verfahren zeichnet sich dadurch aus, dass mit "weicheren" Plasmabedingungen als beim Stand der Technik gearbeitet wird, was in Bezug auf die Plasmaentladung durch eine Energiedichte von kleiner als 10 Wcm⁻³ ausgedrückt wird. So wird bei dem plasmachemischen Verfahren des Standes der Technik mit Energiedichten von größer als 10 Wcm⁻³ gearbeitet, während das erfindungsgemäße Verfahren vorzugsweise Energiedichten von 0,2-2 Wcm⁻³ aufweist.

Unter Energiedichte wird hier die Leistung, welche im Augenblick der Gasentladung eingestrahlt wird, dividiert durch das angeregte Gasvolumen verstanden.

Ferner zeichnet sich das erfindungsgemäße Verfahren gegenüber dem Stand der Technik durch einen geringeren Wasserstoffanteil im Ausgangsgemisch aus. So wird erfindungsgemäß mit einem Mischungsverhältnis Halogensilan:Wasserstoff von 1:0-1:2 gearbeitet, wodurch die eingestrahlte Energie pro zu zersetzendem Äquivalent Halogensilan nochmals deutlich reduziert wird. Diese beträgt vorzugsweise etwa 850-1530 kJ/Mol Halogensilan.

Bei dem erfindungsgemäßen Verfahren wird vorzugsweise in einem Druckbereich von 0,8-10 hPa gearbeitet. Generell ist dieser Druckbereich höher als beim Stand der Technik für Niederdruckgasentladungen (z.B. DE 10 2005 024 041 A1), wobei entscheidend ist, dass die höheren Drücke beim erfindungsgemäßen Verfahren ohne unterstützende Maßnahmen für die Plasmaentladung (beispielsweise Hochspannungsentladung) erreicht werden können, während dies beim Stand der Technik (DE 10 2005 024 041 A1) zwingend der Fall ist. Ohne die erwähnte Unterstützung konnte beim Stand der Technik nur bei Drücken von kleiner als 1 hPa gearbeitet werden.

Die Einkopplung der gewünschten geringeren Leistungen gelingt beim erfindungsgemäßen Verfahren ebenfalls ohne unterstützende Maßnahmen. So kann die Zündung beim erfindungsgemäßen Verfahren ohne Probleme bei 100 W erfolgen.

Während, wie erwähnt, bei dem erfindungsgemäßen Verfahren mit einem Mischungsverhältnis Halogensilan:Wasserstoff von 1:0-1:2 gearbeitet wird, beträgt dieses Mischungsverhältnis beim plasmachemischen Verfahren des Standes der Technik 1:2-1:20 (DE 10 2005 024 041 A1; WO 81/03168).

Was die Temperatur des Reaktors anbetrifft, in dem das erfindungsgemäße Verfahren durchgeführt wird, so werden die Reaktorteile, an denen das halogenierte Polysilan abgeschieden werden soll, vorzugsweise auf einer Temperatur von -70 °C bis 300 °C, insbesondere -20 °C bis 280 °C, gehalten. Generell wird die Temperatur des Reaktors relativ niedrig gehalten, um die Bildung von Si zu vermeiden.

Mit dem erfindungsgemäßen Verfahren lassen sich bevorzugt Produktgemische herstellen, deren Moleküle im Mittel 13-18 Si-Atome besitzen.

Für das erfindungsgemäße Verfahren können zur Erzeugung der Plasmaentladung z.B. elektrische Spannung oder elektromagnetische Wechselfelder verwendet werden. Bevorzugt werden Hochfrequenz-Glimmentladungen bei relativ niedrigen Drücken (wenige hPa).

Für das erfindungsgemäße Verfahren findet als Ausgangsstoff ein Halogensilan Verwendung. Als Halogensilan im Sinne des erfindungsgemäßen Verfahrens werden Verbindungen des Typs HₙSiX₄₋ₙ (X = F, Cl, Br, I; n = 0-3) sowie deren Gemische bezeichnet. Es können bei dem erfindungsgemäßen Verfahren aber auch Halogensilane mit gemischter Halogensubstitution eingesetzt werden.

Die bei dem erfindungsgemäßen Verfahren verwendete Gasmischung (Halogensilan und Wasserstoff) kann zusätzlich durch ein Inertgas verdünnt sein und/oder Zumischungen enthalten, welche die Plasmaerzeugung begünstigen. Die Zumischung von Inertgasen ist jedoch beim erfindungsgemäßen Verfahren nicht zwingend.

Bei einer anderen Ausführungsform des erfindungsgemäßen Verfahrens wird Halogensilan dem Wasserstoffstrom zugemischt, nachdem dieser eine Plasmazone durchquert hat (Remote-Plasma). Dabei kann sowohl das Wasserstoffgas als auch das Halogensilan durch ein Inertgas verdünnt sein und/oder Zumischungen enthalten, welche die Plasmaerzeugung begünstigen. Auch kann das Halogensilan mit Wasserstoff verdünnt eingesetzt werden.

Bei dem erfindungsgemäßen Verfahren werden als Halogensilan bevorzugt Fluorsilane oder Chlorsilane eingesetzt. Eine besonders bevorzugte Ausgangsverbindung ist SiCl₄.

Das Volumenverhältnis Halogensilan:Wasserstoff beträgt bei der Herstellung des halogenierten Polysilans vorzugsweise 1:0 bis 1:20, bevorzugter 1:0 bis 1:2.

Die Erfindung wird nachfolgend anhand von Ausführungsbeispielen beschrieben.

### Ausführungsbeispiel 1

Ein Gemisch aus 500 sccm H₂ und 500 sccm SiCl₄ (1:1) wird in einen Reaktor aus Quarzglas eingeleitet, wobei der Prozessdruck im Bereich von 1,6-1,8 hPa konstant gehalten wird. Das Gasgemisch wird daraufhin durch eine Hochfrequenzentladung in den plasmaförmigen Zustand überführt, wobei sich das gebildete chlorierte Polysilan auf den gekühlten (20°C) Quarzglaswänden des Reaktors niederschlägt. Die eingestrahlte Leistung beträgt 400 W. Nach 2 Stunden wird das gelbe bis orangegelbe Produkt durch Lösen in wenig SiCl₄ aus dem Reaktor entfernt. Nach Entfernen des SiCl₄ unter Vakuum bleiben 91,1 g Polysilan in Form einer orangegelben viskosen Masse zurück.

Die mittlere Molmasse wird per Kryoskopie zu ca. 1700 g/Mol ermittelt, was für das chlorierte Polysilan (SiCl₂)ₙ bzw. SiₙCl₂ₙ₊₂ einer mittleren Kettenlänge von ca. n=17 für (SiCl₂)ₙ bzw. ca. n=16 für SiₙCl₂ₙ₊₂ entspricht.

Das Verhältnis von Si zu Cl im Produktgemisch wird nach Aufschluss durch Chlorid-Titration nach MOHR zu Si:Cl=1:2 (entspricht der empirischen (analytischen) Formel SiCl₂) ermittelt.

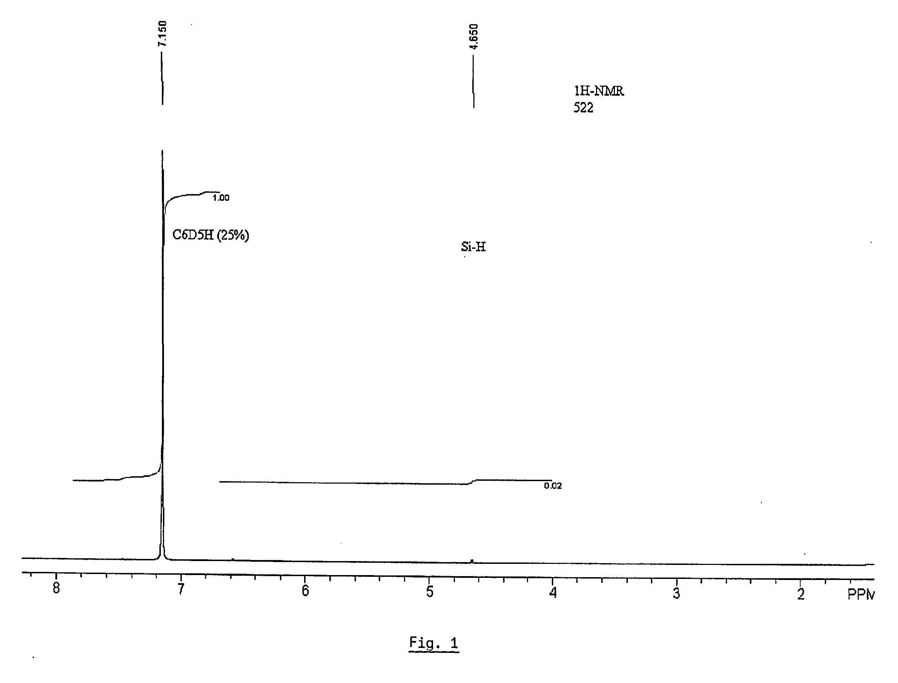

Der Wasserstoffgehalt liegt bei 0.0005 Massen-% und demnach deutlich unter 1 Massen-% (und auch unter 1 Atom-%), wie man folgendem ¹H-NMR-Spektrum (Figur 1) entnehmen kann. Hierzu werden die Integrale des Lösungsmittels bei δ= 7.15 ppm und des Produkts bei δ= 4.66 ppm verglichen. Der Gehalt des Lösungsmittels C₆D₆ liegt hierbei bei ca. 25 Massen-% und dessen Deuterierungsgrad bei 99%.

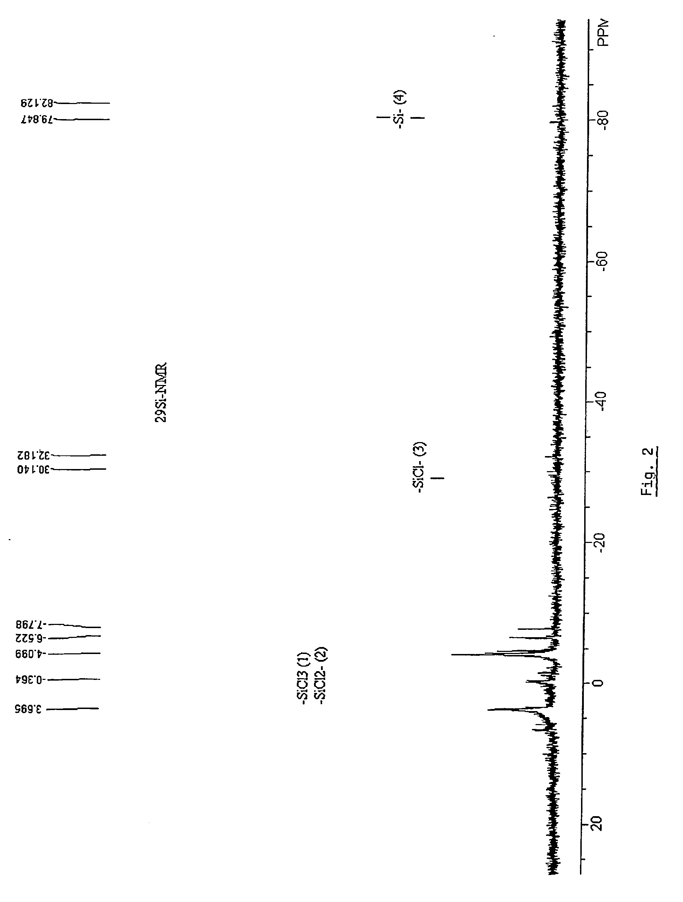

Typische ²⁹Si-NMR-Verschiebungen bei ca. 3,7 ppm, -0,4 ppm, -4,1 ppm und -6,5 ppm sind anhand von folgendem Spektrum (Figur 2) ersichtlich. Diese Signale kommen im Verschiebungsbereich bei (1) und (2), der typisch ist für Signale von SiCl₃-Endgruppen (primäre Si-Atome), und (2), der typisch ist für Signale von SiCl₂-Gruppen (sekundäre Si-Atome), wie sie z.B. als Zwischenglieder im Bereich linearer Ketten auftreten.

Der niedrige Gehalt an kurzkettigen verzweigten Verbindungen, z.B. Dekachlorisotetrasilan (u.a. δ= -32 ppm), Dodekachlorneopentasilan (u.a. δ= -80 ppm) ist ebenfalls aus nachfolgendem ²⁹Si-NMR-Spektrum (Figur 2) ersichtlich. Durch Integration der ²⁹Si-NMR-Spektren zeigt sich, dass der Gehalt an Siliciumatomen, die die Verzweigungsstellen des kurzkettigen Anteiles bilden, bezogen auf das gesamte Produktgemisch 0,6 Massen-% beträgt und damit kleiner als 1 Massen-% ist.

Niedermolekulare Cyclosilane können in den Gemischen nicht nachgewiesen werden. Diese sollten in den ²⁹Si-NMR Spektren scharfe Signale bei δ= 5,8 ppm (Si₄Cl₈), δ= -1,7 ppm (Si₅Cl₁₀), δ= -2,5 ppm (Si₆Cl₁₂) zeigen, die jedoch nicht gefunden werden.

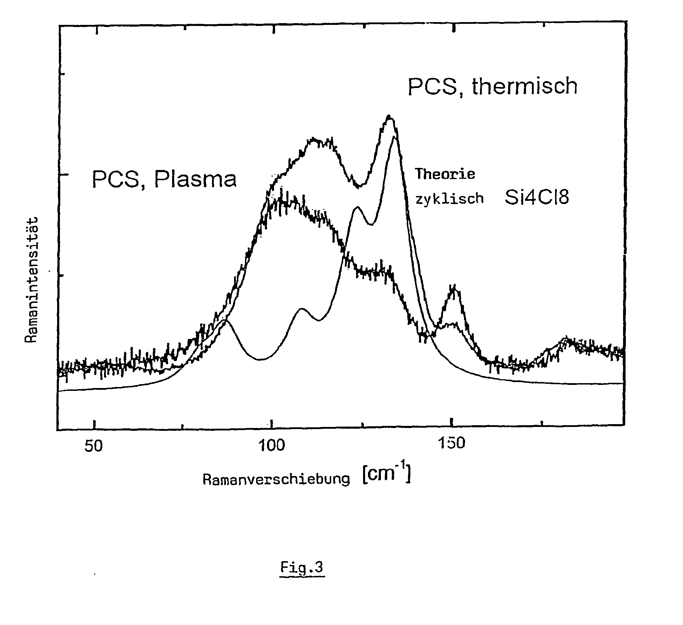

Ein typisches RAMAN-Molekülschwingungsspektrum des chlorierten Polysilans ist im Folgenden (Figur 3) dargestellt. Das Spektrum weist ein Verhältnis I₁₀₀/I₁₃₂ größer 1 auf, d.h., dass die RAMAN-Intensität bei 100 cm⁻¹ (I₁₀₀) deutlich höher ist als diejenige bei 132 cm⁻¹ (I₁₃₂). Zum Vergleich sind das Spektrum eines thermisch erzeugten Perchlorpolysilangemisches und das berechnete Spektrum von Oktachlorcyclotetrasilan (Si₄Cl₈) angegeben, wobei sich jeweils das Verhältnis umkehrt zu I₁₀₀/I₁₃₂ kleiner als 1.

Diese Grafik zeigt auch beispielhaft den Ausschnitt einer theoretischen Kurve. Dabei sind die quantenchemisch gerechneten Moden [Hohenberg P, Kohn W. 1964. Phys. Rev. B 136:864-71; Kohn W, Sham LJ. 1965. Phys. Rev. A 140:1133-38, W. Koch and M. C. Holthausen, A Chemist's Guide to Density Functional Theory, Wiley, Weinheim, 2nd edn., 2000] mit einer Multi-Lorentz-Peak-Funktion angepasst, die etwa die experimentelle spektrale Auflösung simuliert. Hinsichtlich der absoluten Intensität wurde die Theoriekurve so normiert, dass sie zur Anschauung gut in die Grafik passt. Die Relativintensitäten der Peaks in der Theorie stammen unmittelbar aus der first principle-Rechnung. Damit soll gezeigt werden, dass bestimmte Intensitäten typisch für cyklische Polysilane sind. Die Daten des RAMAN-Spektrums deuten dabei auf einen niedrigeren Gehalt cyclischer Polysilane im plasmachemisch erzeugten Polysilangemisch hin, was konsistent mit den NMR-Daten ist (s.o.).

### Ausführungsbeispiel 2

Ein Gemisch aus 300 sccm H₂ und 600 sccm SiCl₄ (1:2) wird in einen Reaktor aus Quarzglas eingeleitet, wobei der Prozessdruck im Bereich von 1,5-1,6 hPa konstant gehalten wird. Das Gasgemisch wird daraufhin durch eine Hochfrequenzentladung in den plasmaförmigen Zustand überführt, wobei sich das gebildete chlorierte Polysilan auf den gekühlten (20°C) Quarzglaswänden des Reaktors niederschlägt. Die eingestrahlte Leistung beträgt 400W. Nach 4 Stunden wird das orangegelbe Produkt durch Lösen in wenig SiCl₄ aus dem Reaktor entfernt. Nach Entfernen des SiCl₄ unter Vakuum bleiben 187,7g chloriertes Polysilan in Form einer orangegelben viskosen Masse zurück.

Die mittlere Molmasse wird per Kryoskopie ermittelt und beträgt ca. 1400 g/Mol, was für das chlorierte Polysilan (SiCl₂)ₙ bzw. SiₙCl₂ₙ₊₂ einer mittleren Kettenlänge von ca. n=14 für (SiCl₂)ₙ bzw. ca. n=13 für SiₙCl₂ₙ₊₂ entspricht.

Das Verhältnis von Si zu Cl im Produktgemisch wird nach Aufschluss durch Chlorid-Titration nach MOHR zu Si:Cl=1:1,8 (entspricht der empirischen (analytischen) Formel SiCl_{1,8}) ermittelt.

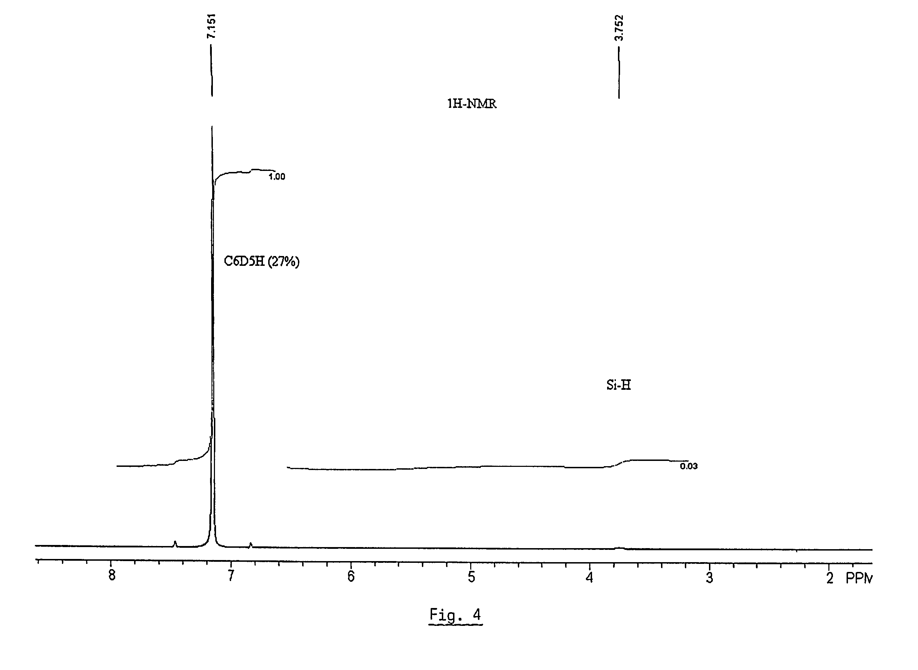

Der Wasserstoffgehalt liegt deutlich unter 1 Massen-% (0.0008%) (auch unter 1 Atom-%), wie man folgendem ¹H-NMR-Spektrum (Figur 4) entnehmen kann. Hierzu werden die Integrale des Lösungsmittels bei δ= 7.15 ppm und des Produkts bei δ= 3,75 ppm verglichen.

Der Gehalt des Lösungsmittels C₆D₆ liegt hierbei bei ca. 27 Massen-% und dessen Deuterierungsgrad bei 99%.

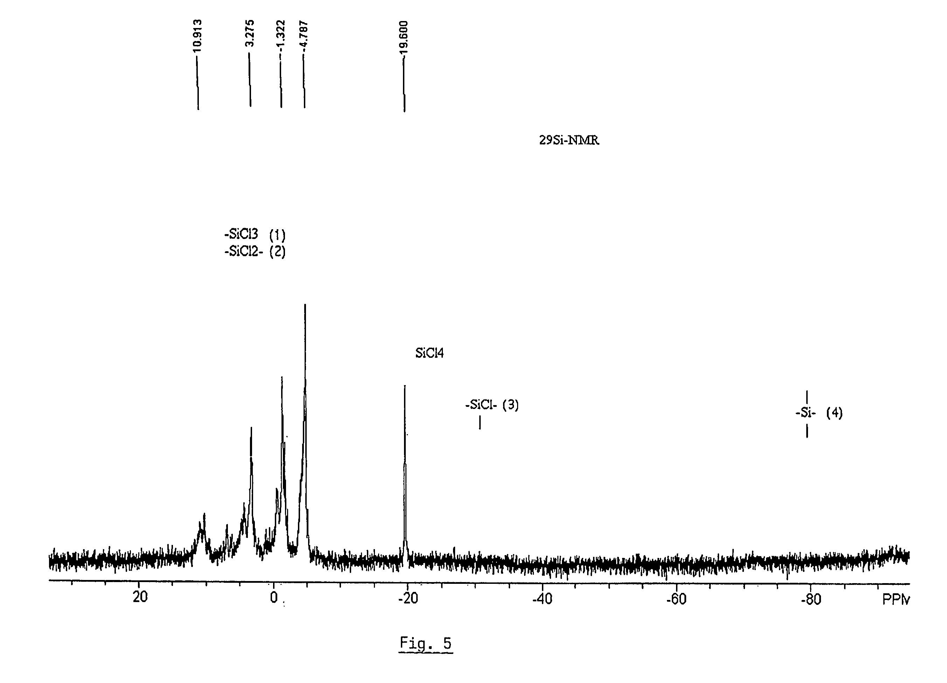

Typische ²⁹Si-NMR-Verschiebungen bei ca. 10,9 ppm, 3,3 ppm, -1,3 ppm und -4,8 ppm sind anhand von folgendem Spektrum (Figur 5) ersichtlich. Diese Signale kommen im Verschiebungsbereich bei (1) und (2), der typisch ist für Signale von SiCl₃-Endgruppen (primäre Si-Atome), und (2), der typisch ist für Signale von SiCl₂-Gruppen (sekundäre Si-Atome), wie sie z.B. als Zwischenglieder im Bereich linearer Ketten auftreten.

Der niedrige Gehalt an kurzkettigen verzweigten Verbindungen, z.B. Dekachlorisotetrasilan (u.a. δ= -32 ppm), Dodekachlorneopentasilan (u.a. δ= -80 ppm) (diese Signale kommen im Verschiebungsbereich bei (3), der typisch ist für Signale von Si-Cl-Gruppen (tertiäre Si-Atome), und (4), der typisch ist für Signale von Si-Gruppen mit ausschließlich Si-Substituenten (quartäre Si-Atome)), sind anhand von folgendem Spektrum (Figur 5) ersichtlich. Durch Integration der ²⁹Si-NMR-Spektren zeigt sich, dass der Gehalt an Siliciumatomen, die genannte Verzweigungsstellen (Si-Cl-Gruppen (tertiäre Si-Atome) und Si-Gruppen mit ausschließlich Si-Substituenten (quartäre Si-Atome)) des kurzkettigen Anteiles bilden, bezogen auf das gesamte Produktgemisch 0,3 Massen-% beträgt und damit kleiner als 1 Massen-% ist. Niedermolekulare Cyclosilane konnten in den Gemischen nicht nachgewiesen werden. Diese sollten in den ²⁹Si-NMR-Spektren scharfe Signale bei δ= 5,8 ppm (Si₄Cl₈), δ= -1,7 ppm (Si₅Cl₁₀), δ= -2,5 ppm (Si₆Cl₁₂) zeigen, die jedoch im Spektrum nicht sicher identifiziert werden können, da das Spektrum in diesem Bereich eine Vielzahl von Signalen aufweist.

Der Peak bei ca. -20 ppm stammt vom Lösungsmittel SiCl₄.

### Ausführungsbeispiel 3

Ein Gemisch aus 200 sccm H₂ und 600 sccm SiCl₄-Dampf (1:3) wird in einen Reaktor aus Quarzglas eingeleitet, wobei der Prozessdruck im Bereich von 1,50-1,55 hPa konstant gehalten wird. Das Gasgemisch wird daraufhin durch eine Hochfrequenzentladung in den plasmaförmigen Zustand überführt, wobei sich das gebildete chlorierte Polysilan auf den gekühlten (20°C) Quarzglaswänden des Reaktors niederschlägt. Die eingestrahlte Leistung beträgt 400W. Nach 2h 9min wird das orangegelbe Produkt durch Lösen in wenig SiCl₄ aus dem Reaktor entfernt. Nach Entfernen des SiCl₄ unter Vakuum bleiben 86,5 g chloriertes Polysilan in Form einer orangegelben viskosen Masse zurück.

Die mittlere Molmasse wird per Kryoskopie ermittelt und beträgt ca. 1300 g/Mol, was für das chlorierte Polysilan (SiCl₂)ₙ bzw. SiₙCl₂ₙ₊₂ einer mittleren Kettenlänge von ca. n=13 für (SiCl₂)ₙ bzw. ca. n=12 für SiₙCl₂ₙ₊₂ entspricht.

Das Verhältnis von Si zu Cl im Produktgemisch wird nach Aufschluss durch Chlorid-Titration nach MOHR zu Si:C1=1:1,7 (entspricht der empirischen (analytischen) Formel SiCl_{1,7}) ermittelt.

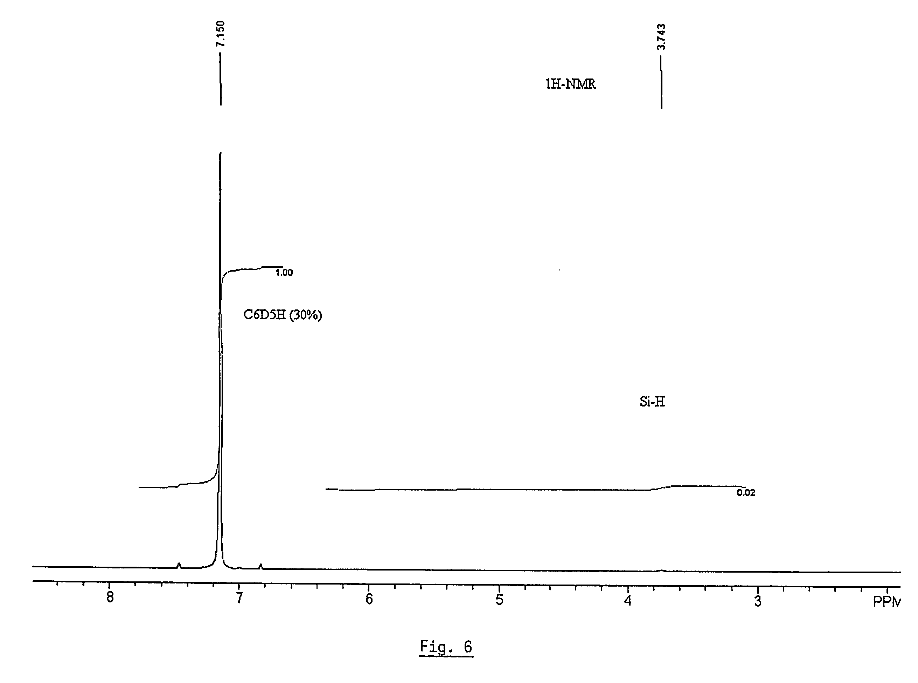

Der Wasserstoffgehalt liegt deutlich unter 1 Massen-% (0.0006%) (auch unter 1 Atom-%), wie man folgendem ¹H-NMR-Spektrum (Figur 6) entnehmen kann. Hierzu werden die Integrale des Lösungsmittels bei δ=7.15 ppm und des Produkts bei δ=3,74 ppm verglichen. Der Gehalt des Lösungsmittels C₆D₆ liegt hierbei bei ca. 30 Massen-% und dessen Deuterierungsgrad bei 99%.

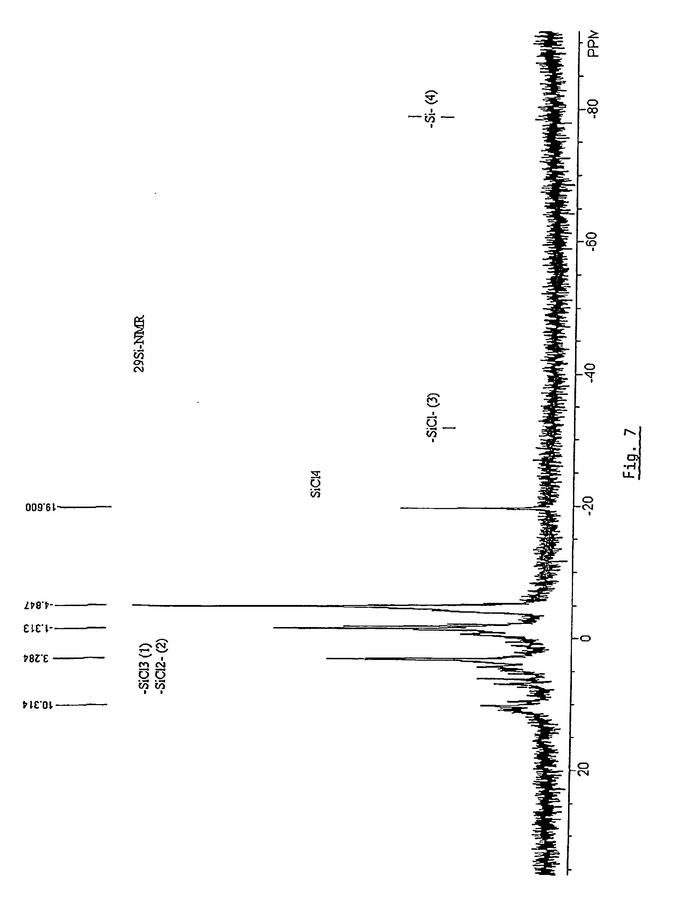

Die typischen ²⁹Si-NMR-Verschiebungen bei ca. 10,3 ppm, 3,3 ppm, -1,3 ppm und -4,8 ppm und der niedrige Gehalt an kurzkettigen verzweigten Verbindungen, z.B. Dekachlorisotetrasilan (u.a. δ= -32 ppm), Dodekachlorneopentasilan (u.a. δ= -80 ppm) (diese Signale kommen im Verschiebungsbereich bei (3), der typisch ist für Signale von Si-Cl-Gruppen (tertiäre Si-Atome), und (4), der typisch ist für Signale von Si-Gruppen mit ausschließlich Si-Substituenten (quartäre Si-Atome)), sind anhand von folgendem Spektrum (Figur 7) ersichtlich.

Der niedrige Gehalt an kurzkettigen verzweigten Verbindungen, z.B. Dekachlorisotetrasilan (u.a. δ= -32 ppm), Dodekachlorneopentasilan (u.a. δ= -80 ppm) (diese Signale kommen im Verschiebungsbereich bei (3), der typisch ist für Signale von Si-Cl-Gruppen (tertiäre Si-Atome), und (4), der typisch ist für Signale von Si-Gruppen mit ausschließlich Si-Substituenten (quartäre Si-Atome)), sind anhand von folgendem Spektrum (Figur 7) ersichtlich. Durch Integration der ²⁹Si-NMR-Spektren zeigt sich, dass der Gehalt an Siliciumatomen, die genannte Verzweigungsstellen (Si-Cl-Gruppen (tertiäre Si-Atome) und Si-Gruppen mit ausschließlich Si-Substituenten (quartäre Si-Atome)) des kurzkettigen Anteiles bilden, bezogen auf das gesamte Produktgemisch 0,6 Massen-% beträgt und damit kleiner als 1 Massen-% ist.

Niedermolekulare Cyclosilane können in den Gemischen nicht nachgewiesen werden. Diese sollten in den ²⁹Si-NMR-Spektren scharfe Signale bei δ= 5,8 ppm (Si₄Cl₈), δ= -1,7 ppm (Si₅Cl₁₀), δ= -2,5 ppm (Si₆Cl₁₂) zeigen, die jedoch im Spektrum nicht sicher identifiziert werden können, da das Spektrum in diesem Bereich eine Vielzahl von Signalen aufweist.

Der Peak bei ca. -20 ppm stammt vom Lösungsmittel SiCl₄.

### Ausführungsbeispiel 4

Ein Gemisch aus 300 sccm H₂ und 240 sccm SiBr₄-Dampf wird in einen Reaktor aus Quarzglas eingeleitet, wobei der Prozessdruck im Bereich von 0,8 hPa konstant gehalten wird. Das Gasgemisch wird daraufhin durch eine Hochfrequenzentladung in den plasmaförmigen Zustand überführt, wobei sich das gebildete bromierte Polysilan auf den gekühlten (20°C) Quarzglaswänden des Reaktors niederschlägt. Die eingestrahlte Leistung beträgt 140 W. Nach 2 Stunden wird das farblose Produkt durch Lösen in Benzol aus dem Reaktor entfernt. Nach Entfernen des Benzols unter Vakuum bleiben 55,2 g bromiertes Polysilan in Form eines weißen Kristallbreis zurück.

Die mittlere Molmasse wird per Kryoskopie ermittelt und beträgt ca. 1680 g/Mol, was für das bromierte Polysilan (SiBr₂)ₙ bzw. SiₙBr₂ₙ₊₂ einer mittleren Kettenlänge von ca. n=9 für (SiBr₂)ₙ bzw. ca. n=8 für SiₙBr₂ₙ₊₂ entspricht.

Das Verhältnis von Si zu Br im Produktgemisch wird nach Aufschluss durch Bromid-Titration nach MOHR zu Si:Br=1:2,3 (entspricht der empirischen (analytischen) Formel SiBr_{2,3}) ermittelt.

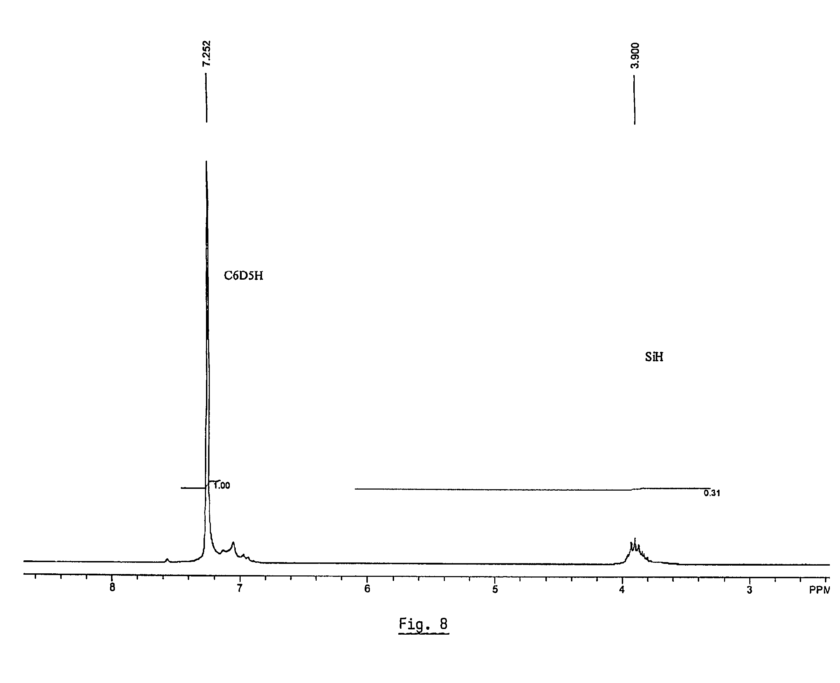

Der Wasserstoffgehalt liegt deutlich unter 1 Massen-% (0.01%) (auch unter 1 Atom-%), wie man folgendem ¹H-NMR-Spektrum (Figur 8) entnehmen kann. Hierzu werden die Integrale des Lösungsmittels bei δ=7.15 ppm und des Produkts bei δ=3,9 ppm verglichen. Der Gehalt des Lösungsmittels C₆D₆ liegt hierbei bei ca. 30 Massen-% und dessen Deuterierungsgrad bei 99%.

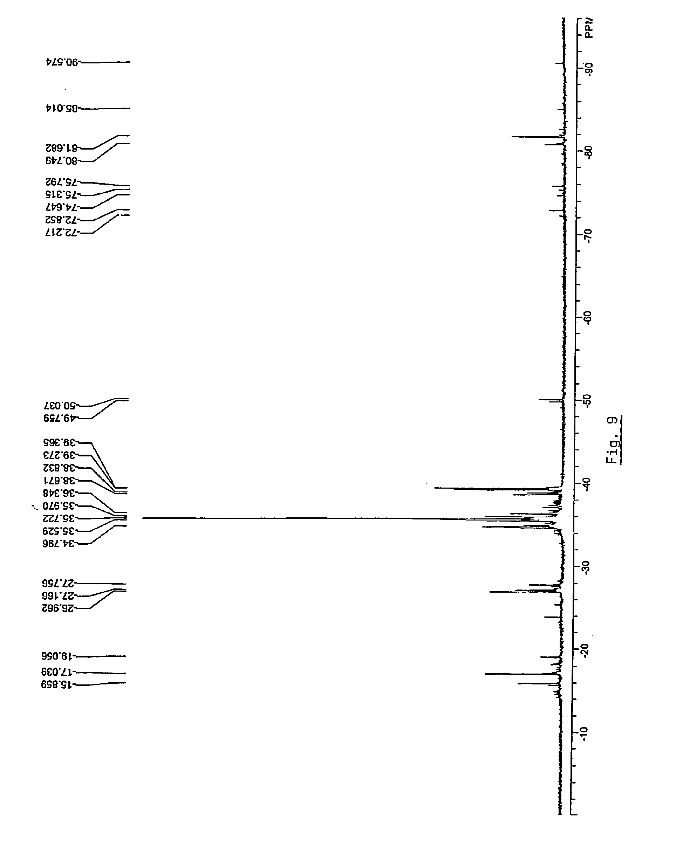

Die typischen ²⁹Si-NMR-Verschiebungen (Figur 9) zeigen sich im Bereich von -15 ppm bis -40 ppm, von -49 ppm bis -51 ppm und von -72 ppm bis -91 ppm.

Der Peak bei ca. -90 ppm stammt vom Edukt SiBr₄.

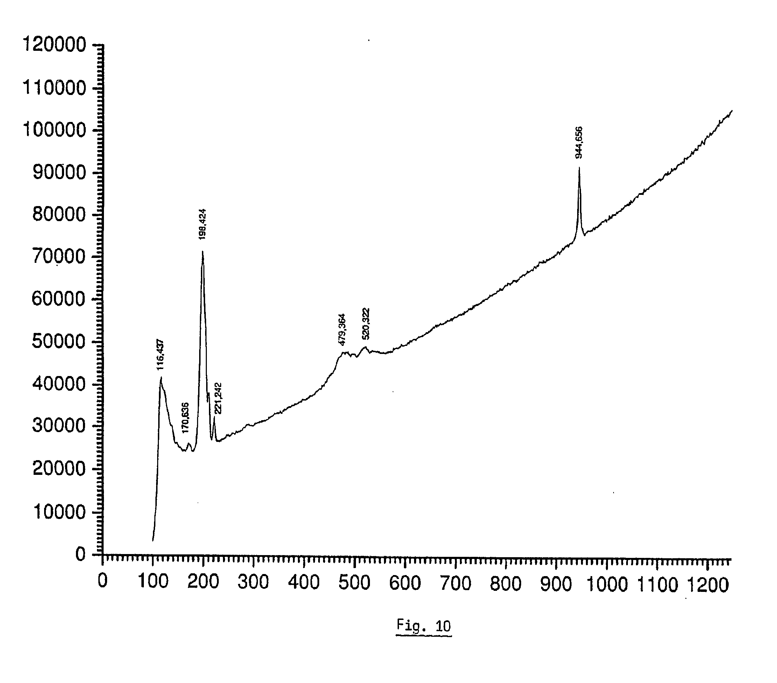

Ein typisches RAMAN-Molekülschwingungsspektrum des bromierten Polysilans ist im Folgenden (Figur 10) dargestellt. Das Spektrum weist typische RAMAN-Intensitäten bei ca. 110 cm⁻¹ bis 130 cm⁻¹, bei 170 cm⁻¹ bis 230 cm⁻¹, bei 450 cm⁻¹ bis 550 cm⁻¹ und bei 940 cm⁻¹ bis 1000 cm⁻¹ auf.

### Ausführungsbeispiel 5

Ein Gemisch aus 100 sccm H₂ und 50 sccm SiF₄-Gas wird in einen Plasmareaktor eingeleitet, wobei der Prozessdruck im Bereich von 1,2 hPa konstant gehalten wird. Das Gasgemisch wird daraufhin durch eine Hochfrequenzentladung in den plasmaförmigen Zustand überführt, wobei sich das gebildete fluorierte Polysilan auf den gekühlten (20°C) Wänden des Reaktors niederschlägt. Die eingestrahlte Leistung beträgt 100 W. Nach 2 h wird das farblose bis gelblich-beigeweiße Produkt durch Lösen in Cyclohexan aus dem Reaktor entfernt. Nach Entfernen des Lösungsmittels unter Vakuum bleiben 0,8 g fluoriertes Polysilan in Form eines weißen bis gelblichbeigen Feststoffs zurück.

Die mittlere Molmasse wird per Kryoskopie ermittelt und beträgt ca. 2500 g/Mol, was für das fluorierte Polysilan (SiF₂)ₙ (M=66,08) bzw. SiₙF₂ₙ₊₂ einer mittleren Kettenlänge von ca. n=38 für (SiF₂)ₙ bzw. ca. n=37 für SiₙF₂ₙ₊₂ entspricht.

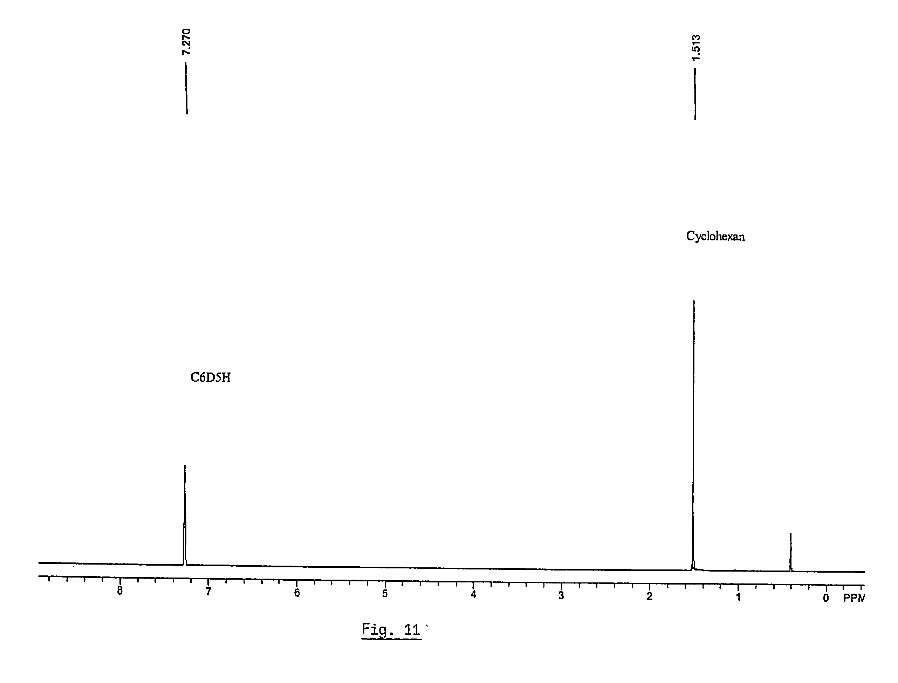

Der Wasserstoffgehalt liegt deutlich unter 1 Massen-% (auch unter 1 Atom-%), wie man folgendem ¹H-NMR-Spektrum (Figur 11) entnehmen kann.

Die typischen ²⁹Si-NMR-Verschiebungen des fluorierten Polysilans zeigen sich im Bereich von -4 ppm bis -25 ppm und/oder von -50 ppm bis -80 ppm.

Ein RAMAN-Molekülschwingungsspektrum des fluorierten Polysilans weist typische Raman-Intensitäten bei ca. 183 cm⁻¹ bis 221 cm⁻¹, bei ca. 497 cm⁻¹ bis 542 cm⁻¹ und bei ca. 900 cm⁻¹ bis 920 cm⁻¹.

### Ausführungsbeispiel 6

Ein Gemisch aus 60 sccm H₂ und 60 sccm SiI₄-Dampf wird in einen Reaktor aus Quarzglas eingeleitet, wobei der Prozessdruck im Bereich von 0,6 hPa konstant gehalten wird. Das Gasgemisch wird daraufhin durch eine Hochfrequenzentladung in den plasmaförmigen Zustand überführt, wobei sich das gebildete iodierte Polysilan auf den gekühlten (20°C) Quarzglaswänden des Reaktors niederschlägt. Die eingestrahlte Leistung beträgt 100 W. Nach 2 h wird das gelbrötliche Produkt durch Lösen in Cyclohexan aus dem Reaktor entfernt. Nach Entfernen des Cyclohexans unter Vakuum bleiben 8 g iodiertes Polysilan in Form eines gelbrötlich bis bräunlichen Feststoffs zurück.

Die mittlere Molmasse wird per Kryoskopie ermittelt und beträgt ca. 2450 g/Mol, was für das iodierte Polysilan (SiI₂)ₙ bzw. SiₙI₂ₙ₊₂ einer mittleren Kettenlänge von ca. n=9 für (SiI₂)ₙ bzw. ca. n=8 für SiₙI₂ₙ₊₂ entspricht.

Das Verhältnis von Si zu I im Produktgemisch wird zu Si:I=1:2,3 (entspricht der empirischen (analytischen) Formel SiI_{2,3}) ermittelt.

Der Wasserstoffgehalt liegt deutlich unter 1 Massen-% (auch unter 4 1 Atom-%).

Die typischen ²⁹Si-NMR-Verschiebungen des iodierten Polysilans zeigen sich im Bereich von -28 ppm bis -52 ppm, von -70 ppm bis -95 ppm und/oder von -138 ppm bis -170 ppm.

Ein typisches RAMAN-Molekülschwingungsspektrum des iodierten Polysilans weist typische Raman-Intensitäten bei ca. 98 cm⁻¹ bis 116 cm⁻¹, bei 132 cm⁻¹ bis 138 cm⁻¹, bei 325 cm⁻¹ bis 350 cm⁻¹ und bei 490 cm⁻¹ bis 510 cm⁻¹ auf.

## Patentansprüche

1. Halogeniertes Polysilan als reine Verbindung oder Gemisch von Verbindungen mit jeweils mindestens einer direkten Bindung Si-Si, deren Substituenten aus Halogen oder aus Halogen und Wasserstoff bestehen und in deren Zusammensetzung das Atomverhältnis Substituent:Silicium mindestens 1:1 beträgt, wobei
a) das Halogen Chlor ist,
b) der Wasserstoff-Gehalt des Polysilans kleiner als 2 Atom-% ist,
c) das Polysilan nahezu keine kurzkettigen verzweigten Ketten und Ringe enthält, wobei der Gehalt an Verzweigungsstellen des kurzkettigen Anteiles bezogen auf das gesamte Produktgemisch kleiner als 1 % beträgt,
d) es ein RAMAN-Molekülschwingungsspektrum von I₁₀₀/I₁₃₂ > 1 aufweist, wobei I₁₀₀ die Raman-Intensität bei 100 cm⁻¹ und I₁₃₂ die Raman-Intensität bei 132 cm⁻¹ bedeuten,
e) es in ²⁹Si-NMR-Spektren seine signifikanten Produktsignale im chemischen Verschiebungsbereich von +15 ppm bis -7 ppm aufweist.

2. Halogeniertes Polysilan als reine Verbindung oder Gemisch von Verbindungen mit jeweils mindestens einer direkten Bindung Si-Si, deren Substituenten aus Halogen oder aus Halogen und Wasserstoff bestehen und in deren Zusammensetzung das Atomverhältnis Substituent:Silicium mindestens 1:1 beträgt, wobei
a) das Halogen Brom ist und
b) es in ²⁹Si-NMR-Spektren seine signifikanten Produktsignale im chemischen Verschiebungsbereich von -10 ppm bis -42 ppm, von -48 ppm bis -52 ppm und/oder -65 ppm bis -96 ppm aufweist.

3. Halogeniertes Polysilan nach Anspruch 2, **dadurch gekennzeichnet, dass** es typische RAMAN-Intensitäten bei 110 cm⁻¹ bis 130 cm⁻¹, 170 cm⁻¹ bis 230 cm⁻¹, bei 450 cm⁻¹ bis 550 cm⁻¹ und bei 940 cm⁻¹ bis 1.000 cm⁻¹ aufweist.

4. Halogeniertes Polysilan als reine Verbindung oder Gemisch von Verbindungen mit jeweils mindestens einer direkten Bindung Si-Si, deren Substituenten aus Halogen oder aus Halogen und Wasserstoff bestehen und in deren Zusammensetzung das Atomverhältnis Substituent:Silicium mindestens 1:1 beträgt, wobei
a) das Halogen Fluor ist und
b) es in ²⁹Si-NMR-Spektren seine signifikanten Produktsignale im chemischen Verschiebungsbereich von 8 ppm bis -30 ppm und/oder von -45 ppm bis -115 ppm aufweist,
und wobei das halogenierte Polysilan überwiegend lange Ketten mit n > 6 enthält.

5. Halogeniertes Polysilan nach Anspruch 4, **dadurch gekennzeichnet, dass** es typische RAMAN-Intensitäten bei ca. 180 cm⁻¹ bis 225 cm⁻¹, bei ca. 490 cm⁻¹ bis 550 cm⁻¹ und bei ca. 900 cm⁻¹ bis 980 cm⁻¹.

6. Halogeniertes Polysilan als reine Verbindung oder Gemisch von Verbindungen mit jeweils mindestens einer direkten Bindung Si-Si, deren Substituenten aus Halogen oder aus Halogen und Wasserstoff bestehen und in deren Zusammensetzung das Atomverhältnis Substituent:Silicium mindestens 1:1 beträgt, wobei
a) das Halogen Iod ist und
b) es in ²⁹Si-NMR-Spektren seine signifikanten Produktsignale im chemischen Verschiebungsbereich von -20 ppm bis -55 ppm, von -65 ppm bis -105 ppm und/oder von -135 ppm bis -181 ppm aufweist.

7. Halogeniertes Polysilan nach Anspruch 6, **dadurch gekennzeichnet, dass** es typische RAMAN-Intensitäten bei ca. 95 cm⁻¹ bis 120 cm⁻¹, bei 130 cm⁻¹ bis 140 cm⁻¹, bei 320 cm⁻¹ bis 390 cm⁻¹ und bei 480 cm⁻¹ bis 520 cm⁻¹.

8. Halogeniertes Polysilan nach einem der Ansprüche 2 bis 7, **dadurch gekennzeichnet, dass** der Wasserstoff-Gehalt des Polysilans kleiner als 4 Atom-%, insbesondere kleiner als 1 Atom-%, ist.

9. Halogeniertes Polysilan nach einem der vorangehenden Ansprüche, **dadurch gekennzeichnet, dass** es Halogensubstituenten mehrerer verschiedener Halogene enthält.

10. Halogeniertes Polysilan nach einem der vorangehenden Ansprüche, **dadurch gekennzeichnet, dass** es überwiegend lineare lange Ketten enthält.

11. Halogeniertes Polysilan nach einem der vorangehenden Ansprüche, **dadurch gekennzeichnet, dass** die mittlere Größe des Grundgerüstes des Rohgemisches des halogenierten Polysilans n = 8-20 beträgt.

12. Halogeniertes Polysilan nach einem der vorangehenden Ansprüche, **dadurch gekennzeichnet, dass** es zähviskos bis fest ist.

13. Verfahren zum Herstellen von halogeniertem Polysilan nach einem der vorangehenden Ansprüche durch Umsetzen von Halogensilan mit Wasserstoff unter Erzeugung einer Plasmaentladung, **dadurch gekennzeichnet, dass** mit einem Mischungsverhältnis Halogensilan:Wasserstoff von 1:0-1:2 und in Bezug auf die Plasmaentladung mit einer Energiedichte von kleiner als 10 Wcm⁻³ gearbeitet wird.

14. Verfahren nach Anspruch 13, **dadurch gekennzeichnet, dass** die eingestrahlte Energie pro eingesetztem Äquivalent Halogensilan 850-1530 kJ/Mol Halogensilan beträgt.

15. Verfahren nach einem der Ansprüche 13 bis 14, **dadurch gekennzeichnet, dass** die Reaktorteile, an denen das halogenierte Polysilan abgeschieden wird, auf einer Temperatur von -70 °C bis 300 °C, insbesondere -20°C bis 280 °C, gehalten werden.

## Claims

1. Halogenated polysilane as pure compound or mixture of compounds each having at least one direct Si-Si bond, whose substituents consist of halogen or of halogen and hydrogen and in the composition of which the atomic ratio of substituent to silicon is at least 1:1, wherein
a) the halogen is chlorine,
b) the hydrogen content of the polysilane is less than 2 atom-%,
c) the polysilane contains hardly any short-chain branched chains and rings, and the content of branching points of the short-chain fraction relative to the total product mixture is less than 1%,
d) it has a Raman molecular vibrational spectrum of I₁₀₀/I₁₃₂ > 1, where I₁₀₀ denotes the Raman intensity at 100 cm⁻¹ and I₁₃₂ denotes the Raman intensity at 132 cm⁻¹,
e) in ²⁹Si-NMR spectra it has its significant product signals in the range of chemical shift from +15 ppm to -7 ppm.

2. Halogenated polysilane as pure compound or mixture of compounds each having at least one direct Si-Si bond, whose substituents consist of halogen or of halogen and hydrogen and in the composition of which the atomic ratio of substituent to silicon is at least 1:1, wherein
a) the halogen is bromine, and
b) in ²⁹Si-NMR spectra it has its significant product signals in the range of chemical shift from -10 ppm to -42 ppm, from -48 ppm to -52 ppm and/or -65 ppm to -96 ppm.

3. Halogenated polysilane according to Claim 2, **characterized in that** it has typical Raman intensities at 110 cm⁻¹ to 130 cm⁻¹, 170 cm⁻¹ to 230 cm⁻¹, at 450 cm⁻¹ to 550 cm⁻¹ and at 940 cm⁻¹ to 1000 cm⁻¹.

4. Halogenated polysilane as pure compound or mixture of compounds each having at least one direct Si-Si bond, whose substituents consist of halogen or of halogen and hydrogen and in the composition of which the atomic ratio of substituent to silicon is at least 1:1, wherein
a) the halogen is fluorine, and
b) in ²⁹Si-NMR spectra it has its significant product signals in the range of chemical shift from 8 ppm to -30 ppm and/or from -45 ppm to -115 ppm, and wherein the halogenated polysilane mainly contains long chains with n > 6.

5. Halogenated polysilane according to Claim 4, **characterized in that** it has typical Raman intensities at approx. 180 cm⁻¹ to 225 cm⁻¹, at approx. 490 cm⁻¹ to 550 cm⁻¹ and at approx. 900 cm⁻¹ to 980 cm⁻¹.

6. Halogenated polysilane as pure compound or mixture of compounds each having at least one direct Si-Si bond, whose substituents consist of halogen or of halogen and hydrogen and in the composition of which the atomic ratio of substituent to silicon is at least 1:1, wherein
a) the halogen is iodine, and
b) in ²⁹Si-NMR spectra it has its significant product signals in the range of chemical shift from -20 ppm to -55 ppm, from -65 ppm to -105 ppm and/or from - 135 ppm to -181 ppm.

7. Halogenated polysilane according to Claim 6, **characterized in that** it has typical Raman intensities at approx. 95 cm⁻¹ to 120 cm⁻¹, at 130 cm⁻¹ to 140 cm⁻¹, at 320 cm⁻¹ to 390 cm⁻¹ and at 480 cm⁻¹ to 520 cm⁻¹.

8. Halogenated polysilane according to one of Claims 2 to 7, **characterized in that** the hydrogen content of the polysilane is less than 4 atom-%, in particular less than 1 atom-%.

9. Halogenated polysilane according to one of the preceding claims, **characterized in that** it contains halogen substituents of several different halogens.

10. Halogenated polysilane according to one of the preceding claims, **characterized in that** it mainly contains long linear chains.

11. Halogenated polysilane according to one of the preceding claims, **characterized in that** the average size of the backbone chain of the raw mixture of the halogenated polysilane is n = 8-20.

12. Halogenated polysilane according to one of the preceding claims, **characterized in that** it is highly viscous to solid.

13. Process for production of halogenated polysilane according to one of the preceding claims by reacting halosilane with hydrogen with production of a plasma discharge, **characterized in that** it is carried out with a mixture ratio of halosilane to hydrogen of 1:0-1:2 and, with respect to the plasma discharge, with an energy density of less than 10 Wcm⁻³.

14. Process according to Claim 13, **characterized in that** the energy input per halosilane equivalent used is 850-1530 kJ/mol halosilane.

15. Process according to one of Claims 13 to 14, **characterized in that** the reactor parts on which the halogenated polysilane is deposited are maintained at a temperature from -70°C to 300°C, in particular -20°C to 280°C.

## Revendications

1. Polysilane halogéné en tant que composé pur ou en tant que mélange de composés présentant à chaque fois au moins une liaison directe Si-Si, dont les substituants sont constitués d'halogène ou d'halogène et d'hydrogène et présentant, dans sa composition, un rapport atomique substituant:silicium d'au moins 1:1,
a) l'halogène étant le chlore,
b) la teneur en hydrogène du polysilane étant inférieure à 2% en atome,
c) le polysilane ne contenant quasiment pas de chaînes ramifiées à courte chaîne ni de cycles, la teneur en sites de ramification de la proportion à courte chaîne par rapport au mélange total de produits étant inférieure à 1%,
d) présentant un spectre de vibration moléculaire RAMAN de I₁₀₀/I₁₃₂ > 1, I₁₀₀ signifiant l'intensité Raman à 100 cm⁻¹ et I₁₃₂ l'intensité Raman à 132 cm⁻¹,
e) présentant, dans les spectres ²⁹Si-RMN ses signaux de produit significatifs dans la zone de déplacement chimique de +15 ppm à -7 ppm.

2. Polysilane halogéné en tant que composé pur ou en tant que mélange de composés présentant à chaque fois au moins une liaison directe Si-Si, dont les substituants sont constitués d'halogène ou d'halogène et d'hydrogène et présentant, dans sa composition, un rapport atomique substituant:silicium d'au moins 1:1,
a) l'halogène étant le brome et
b) présentant dans les spectres ²⁹Si-RMN ses signaux de produit significatifs dans la zone de déplacement chimique de -10 ppm à -42 ppm, de -48 ppm à -52 ppm et/ou de -65 ppm à -96 ppm.

3. Polysilane halogéné selon la revendication 2, **caractérisé en ce qu'**il présente des intensités RAMAN caractéristiques à 110 cm⁻¹ jusqu'à 130 cm⁻¹, à 170 cm⁻¹ jusqu'à 230 cm⁻¹, à 450 cm⁻¹ jusqu'à 550 cm⁻¹ et à 940 cm⁻¹ jusqu'à 1000 cm⁻¹.

4. Polysilane halogéné en tant que composé pur ou en tant que mélange de composés présentant à chaque fois au moins une liaison directe Si-Si, dont les substituants sont constitués d'halogène ou d'halogène et d'hydrogène et présentant, dans sa composition, un rapport atomique substituant:silicium d'au moins 1:1,
a) l'halogène étant le fluor et
b) présentant dans les spectres ²⁹Si-RMN ses signaux de produit significatifs dans la plage de déplacement chimique de 8 ppm à -30 ppm et/ou de -45 ppm à -115 ppm,
et le polysilane halogéné présentant principalement des chaînes longues avec n > 6.

5. Polysilane halogéné selon la revendication 4, **caractérisé en ce qu'**il présente des intensités RAMAN caractéristiques à environ 180 cm⁻¹ jusqu'à 225 cm⁻¹, à environ 490 cm⁻¹ jusqu'à 550 cm⁻¹ et à environ 900 cm⁻¹ jusqu'à 980 cm⁻¹.

6. Polysilane halogéné en tant que composé pur ou en tant que mélange de composés présentant à chaque fois au moins une liaison directe Si-Si, dont les substituants sont constitués d'halogène ou d'halogène et d'hydrogène et présentant, dans sa composition, un rapport atomique substituant:silicium d'au moins 1:1,
a) l'halogène étant l'iode et
b) présentant dans les spectres ²⁹Si-RMN ses signaux de produit significatifs dans la zone de déplacement chimique de -20 ppm à -55 ppm, de -65 ppm à -105 ppm et/ou de -135 ppm à -181 ppm.

7. Polysilane halogéné selon la revendication 6, **caractérisé en ce qu'**il présente des intensités RAMAN caractéristiques à environ 95 cm⁻¹ jusqu'à 120 cm⁻¹, à 130 cm⁻¹ jusqu'à 140 cm⁻¹, à 320 cm⁻¹ jusqu'à 390 cm⁻¹ et à 480 cm⁻¹ jusqu'à 520 cm⁻¹.

8. Polysilane halogéné selon l'une quelconque des revendications 2 à 7, **caractérisé en ce que** la teneur en hydrogène du polysilane est inférieure à 4% en atome, en particulier inférieure à 1% en atome.

9. Polysilane halogéné selon l'une quelconque des revendications précédentes, **caractérisé en ce qu'**il contient des substituants halogénés de plusieurs halogènes différents.

10. Polysilane halogéné selon l'une quelconque des revendications précédentes, **caractérisé en ce qu'**il contient principalement des chaînes linéaires longues.

11. Polysilane halogéné selon l'une quelconque des revendications précédentes, **caractérisé en ce que** la taille moyenne de la structure de base du mélange brut du polysilane halogéné n = 8-20.

12. Polysilane halogéné selon l'une quelconque des revendications précédentes, **caractérisé en ce qu'**il est visqueux à solide.

13. Procédé pour la préparation de polysilane halogéné selon l'une quelconque des revendications par transformation d'halogénosilane avec de l'hydrogène avec génération d'une décharge de plasma, **caractérisé en ce qu'**on travaille à un rapport de mélange halogénosilane:hydrogène de 1:0-1:2 et, en ce qui concerne la décharge de plasma, à une densité énergétique inférieure à 10 Wcm⁻³.

14. Procédé selon la revendication 13, **caractérisé en ce que** l'énergie irradiée par équivalent utilisé d'halogénosilane est de 850-1530 kJ/mole d'halogénosilane.

15. Procédé selon l'une quelconque des revendications 13 à 14, **caractérisé en ce que** les pièces de réacteur sur lesquelles le polysilane halogéné est déposé sont maintenues à une température de -70°C à 300°C, en particulier de -20°C à 280°C.
